(19) Europäisches Patentamt
European Patent Office
Office européen des brevets

(11) EP 4 693 455 A1

(12) **EUROPEAN PATENT APPLICATION**
published in accordance with Art. 153(4) EPC

(43) Date of publication:
**11.02.2026 Bulletin 2026/07**

(21) Application number: **25786622.8**

(22) Date of filing: **26.02.2025**

(51) International Patent Classification (IPC):
***H01M 4/1391*** *(2010.01)* ***H01M 4/62*** *(2006.01)*
***H01M 4/525*** *(2010.01)*

(52) Cooperative Patent Classification (CPC):
**H01G 11/38; H01M 4/131; H01M 4/1391; H01M 4/525; H01M 4/62;** Y02E 60/10

(86) International application number:
**PCT/JP2025/006733**

(87) International publication number:
**WO 2025/215959 (16.10.2025 Gazette 2025/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.04.2024 JP 2024063448**

(71) Applicant: **Daikin Industries, Ltd.**
**Osaka-shi, Osaka 530-0001 (JP)**

(72) Inventors:
- **ICHINOSE, Yuma**
**Osaka-Shi, Osaka 530-0001 (JP)**
- **YAMAZAKI, Shigeaki**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) POSITIVE ELECTRODE MIXTURE, POSITIVE ELECTRODE, AND SECONDARY BATTERY

(57) The present disclosure provides a positive electrode mixture comprising a fluorine-containing polymer (A), a fluorine-containing copolymer (B), a positive electrode active material (C), a non-aqueous solvent (D), and water (E), wherein the fluorine-containing polymer (A) contains vinylidene fluoride unit and a monomer unit derived from a monomer (1): $CR^1R^2=CR^3-R^4CO_2Y^1$, wherein the fluorine-containing copolymer (B) contains vinylidene fluoride unit and a perfluoromonomer unit, wherein the positive electrode active material (C) is a positive electrode active material represented by the general formula (C): $Li_yNi_{1-x}M_xO_2$, and wherein a content of the water (E) is 200 to 10,000 ppm by mass based on a mass of the non-aqueous solvent (D).

EP 4 693 455 A1

## Description

TECHNICAL FIELD

The present disclosure relates to a positive electrode mixture, a positive electrode, and a secondary battery.

BACKGROUND ART

Patent Document 1 describes a slurry for a positive electrode mixture of a lithium secondary battery comprising a positive electrode active material (A), a binder (B), and an organic solvent (C), wherein the positive electrode active material (A) is a lithium-containing composite metal oxide represented by formula (A):

$$Li_xM^1_yM^2_{1-y}O_2$$

wherein $0.4 \leq x \leq 1$; $0.3 \leq y \leq 1$; $M^1$ is at least one selected from the group consisting of Ni and Mn; and $M^2$ is at least one selected from the group consisting of Co, Al, and Fe, and
wherein the binder (B) is a fluorine-containing polymer represented by a compositional formula (B):

$$(VDF)_m(TFE)_n(HFP)_l$$

wherein VDF is a structural unit derived from vinylidene fluoride; TFE is a structural unit derived from tetrafluoroethylene; HFP is a structural unit derived from hexafluoropropylene; $0.45 \leq m \leq 1$; $0 \leq n \leq 0.5$; and $0 \leq l \leq 0.1$, provided that and $m + n + l = 1$.

Patent Document 2 describes a positive electrode structure comprising a current collector and a positive electrode mixture layer provided on one side or both sides of the current collector, wherein the positive electrode mixture layer has a thickness of 69 μm or more, wherein the positive electrode mixture layer has a density of 3.0 to 5.0 g/$cm^3$, wherein the positive electrode mixture layer contains a positive electrode active material and a binder, wherein the positive electrode active material contains a lithium-nickel-based composite oxide, wherein the binder contains a fluorine-containing copolymer, and wherein the fluorine-containing copolymer contains vinylidene fluoride unit and a fluorinated monomer unit (excluding vinylidene fluoride unit).

RELATED ART

PATENT DOCUMENTS

Patent Document 1: International Publication No. WO 2010/092976
Patent Document 2: International Publication No. WO 2020/071336

SUMMARY OF THE INVENTION

PROBLEM TO BE SOLVED BY THE INVENTION

An object of the present disclosure is to provide a positive electrode mixture whose viscosity is unlikely to be increased.

MEANS FOR SOLVING THE PROBLEM

According to the present disclosure, provided is a positive electrode mixture comprising a fluorine-containing polymer (A), a fluorine-containing copolymer (B), a positive electrode active material (C), a non-aqueous solvent (D), and water (E),

wherein the fluorine-containing polymer (A) contains vinylidene fluoride unit and a monomer unit derived from a monomer (1) represented by the general formula (1):

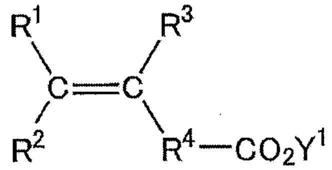

wherein $R^1$ to $R^3$ independently represent hydrogen atom or a hydrocarbon group having 1 to 8 carbon atoms; $R^4$ represents single bond or a hydrocarbon group having 1 to 8 carbon atoms; and $Y^1$ represents an inorganic cation and/or an organic cation,
wherein the fluorine-containing copolymer (B) contains vinylidene fluoride unit and a perfluoromonomer unit,
wherein the positive electrode active material (C) is a positive electrode active material represented by the general formula (C): $Li_yNi_{1-x}M_xO_2$
wherein x is $0.01 \leq x \leq 0.7$; y is $0.9 \leq y \leq 2.0$; and M represents a metal atom (excluding Li and Ni), and
wherein a content of water (E) is 200 to 10,000 ppm by mass based on a mass of the non-aqueous solvent (D).

EFFECTS OF INVENTION

According to the present disclosure, it is possible to provide a positive electrode mixture whose viscosity is unlikely to be increased.

DESCRIPTION OF EMBODIMENTS

Hereinafter, specific embodiments of the present disclosure will be described in detail, but the present disclosure is not limited to the following embodiments.
Patent Document 1 describes that a lithium-containing composite oxide containing Ni and Mn is basically basic, and that, although the reason therefor has not been confirmed, there is a problem that, in a slurry for a positive electrode mixture in which it coexists with polyvinylidene fluoride (PVdF) or a vinylidene fluoride (VdF)-based copolymer, gelation occurs and the stability of the slurry is impaired. And Patent Document 1 describes that, by using a VdF/TFE-based copolymer in which VdF is copolymerized with a specific amount of tetrafluoroethylene (TFE), the slurry for a positive electrode mixture becomes homogeneous and stable. Patent Document 1 further describes that reducing the water content in the organic solvent used for preparing the slurry for a positive electrode mixture improves the stability of the slurry.
However, in the case where a vinylidene fluoride polymer having a specific functional group and a fluorine-containing copolymer containing vinylidene fluoride unit and a perfluoromonomer unit are used as binders used for the positive electrode mixture, it has been found that the viscosity of the positive electrode mixture may be increased even in the case where the prior art is utilized. Therefore, there is a demand for a new technology that is capable of suppressing the increase in viscosity of the positive electrode mixture at a higher level even in the case where a specific binder is used.
After diligently studying a means for solving the above problem, it has been unexpectedly found that by allowing water to be present in the positive electrode mixture in a content in an extremely limited range, the increase in viscosity of the positive electrode mixture can be suppressed at a higher level.
That is, according to the present disclosure, provided is a positive electrode mixture comprising a fluorine-containing polymer (A), a fluorine-containing copolymer (B), a positive electrode active material (C), a non-aqueous solvent (D), and water (E), wherein a content of the water (E) is 200 to 10,000 ppm by mass based on a mass of the non-aqueous solvent (D).
Since the positive electrode mixture of the present disclosure comprises the water (E) in a content of 200 to 10,000 ppm by mass based on the mass of the non-aqueous solvent (D), even in the case where the positive electrode mixture is prepared and then allowed to stand for a while, the increase in viscosity of the positive electrode mixture is unlikely to occur, and therefore, by applying the positive electrode mixture of the present disclosure to a current collector, a homogeneous and smooth positive electrode mixture layer can be easily formed on the current collector.
Next, each component contained in the positive electrode mixture of the present disclosure will be described in detail.

<Fluorine-containing polymer (A)>

The positive electrode mixture of the present disclosure comprises a fluorine-containing polymer (A) containing vinylidene fluoride (VdF) unit and a monomer unit derived from a monomer (1) represented by the general formula (1):

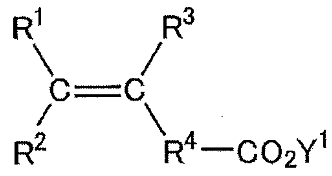

wherein $R^1$ to $R^3$ independently represent hydrogen atom or a hydrocarbon group having 1 to 8 carbon atoms; $R^4$ represents single bond or a hydrocarbon group having 1 to 8 carbon atoms; and $Y^1$ represents an inorganic cation and/or an organic cation. By comprising the fluorine-containing polymer (A), the positive electrode mixture can achieve excellent adhesiveness between the positive electrode mixture layer and the current collector.

In the general formula (1), $Y^1$ represents an inorganic cation and/or an organic cation. Examples of the inorganic cation include a cation such as H, Li, Na, K, Mg, Ca, Al, and Fe. Examples of the organic cation include a cation such as $NH_4$, $NH_3R^5$, $NH_2R^5_2$, $NHR^5_3$, and $NR^5_4$ ($R^5$ independently represents an alkyl group having 1 to 4 carbon atoms). $Y^1$ is preferably H, Li, Na, K, Mg, Ca, Al, or $NH_4$, more preferably H, Li, Na, K, Mg, Al, or $NH_4$, still more preferably H, Li, Al, or $NH_4$, and particularly preferably H. Note that specific examples of the inorganic cation and the organic cation are listed with their sign and valence omitted for convenience.

In the general formula (1), $R^1$ to $R^3$ independently represent hydrogen atom or a hydrocarbon group having 1 to 8 carbon atoms. The hydrocarbon group described above is a monovalent hydrocarbon group. The number of carbon atoms in the hydrocarbon group described above is preferably 4 or less. Examples of the hydrocarbon group described above include an alkyl group, an alkenyl group, and an alkynyl group with the number of carbon atoms described above, and a methyl group or an ethyl group is preferred. It is preferable that $R^1$ and $R^2$ are independently hydrogen atom, methyl group, or ethyl group, and it is preferable that $R^3$ is hydrogen atom or methyl group.

In the general formula (1), $R^4$ represents single bond or a hydrocarbon group having 1 to 8 carbon atoms. The hydrocarbon group described above is a divalent hydrocarbon group. The number of carbon atoms in the hydrocarbon group described above is preferably 4 or less. Examples of the hydrocarbon group described above include an alkylene group and an alkenylene group with the number of carbon atoms described above. In particular, at least one selected from the group consisting of a methylene group, an ethylene group, an ethylidene group, a propylidene group, and an isopropylidene group is preferred, and a methylene group is more preferred.

As the monomer (1), at least one selected from the group consisting of (meth)acrylic acid and a salt thereof, vinyl acetic acid (3-butenoic acid) and a salt thereof, 3-pentenoic acid and a salt thereof, 4-pentenoic acid and a salt thereof, 3-hexenoic acid and a salt thereof, 4-heptenoic acid and a salt thereof, and 5-hexenoic acid and a salt thereof is preferred, and at least one selected from the group consisting of (meth)acrylic acid and a salt thereof, 3-butenoic acid and a salt thereof, and 4-pentenoic acid and a salt thereof is more preferred.

The fluorine-containing polymer (A) may contain a monomer unit derived from a monomer that is copolymerizable with VdF (excluding the monomer unit derived from a monomer (1)). Examples of the monomer that is copolymerizable with VdF include a fluorinated monomer and a non-fluorinated monomer (excluding the monomer (1)), and a fluorinated monomer is preferred. Examples of the fluorinated monomer include vinyl fluoride, trifluoroethylene, chlorotrifluoroethylene (CTFE), a fluoroalkyl vinyl ether, hexafluoropropylene (HFP), a (perfluoroalkyl)ethylene, hexafluoroisobutene, 2,3,3,3-tetrafluoropropene, and trans-1,3,3,3-tetrafluoropropene. Examples of the non-fluorinated monomer include ethylene, propylene, and acryloyloxyethyl succinate.

In the fluorine-containing polymer (A), the monomer that is copolymerizable with VdF is preferably at least one fluorinated monomer selected from the group consisting of CTFE, a fluoroalkyl vinyl ether, and HFP.

The content of VdF unit in the fluorine-containing polymer (A) is, since further excellent adhesiveness between the positive electrode mixture layer and the current collector can be obtained, preferably 84.0 to 99.999 mol%, more preferably 92.0 mol% or more, still more preferably more than 95.0 mol%, further still more preferably 97.0 mol% or more, and particularly preferably 98.5 mol% or more, and it is more preferably 99.99 mol% or less, and still more preferably 99.9 mol% or less, based on all monomer units.

The content of the monomer unit derived from a monomer (1) in the fluorine-containing polymer (A) is, since further excellent adhesiveness between the positive electrode mixture layer and the current collector can be obtained, preferably 0.001 to 16.0 mol%, more preferably 0.01 mol% or more, and still more preferably 0.1 mol% or more, and it is more preferably 8.0 mol% or less, still more preferably less than 5.0 mol%, further still more preferably 3.0 mol% or less, and particularly preferably 1.5 mol% or less, based on all monomer units.

The content of the monomer unit derived from a monomer that is copolymerizable with VdF (excluding the monomer unit derived from a monomer (1)) in the fluorine-containing polymer (A) is preferably 0 to 5.0 mol%, more preferably 3.0 mol% or less, and still more preferably less than 1 mol%, based on all monomer units. The content of the monomer unit derived from a monomer that is copolymerizable with VdF in the fluorine-containing polymer (A) may be 0 mol%. That is, in one embodiment, the fluorine-containing polymer (A) does not contain the monomer unit derived from a

monomer that is copolymerizable with VdF.

In the present disclosure, the compositional features of the fluorine-containing polymer (A) and the fluorine-containing copolymer (B) can be measured by, for example, $^{19}$F-NMR measurement. Also, in the present disclosure, the content of the monomer unit derived from a monomer (1) and a monomer unit having a polar group in the fluorine-containing polymer (A) and the fluorine-containing copolymer (B) can be measured by acid-base titration of an acid group.

The weight average molecular weight (in terms of polystyrene) of the fluorine-containing polymer (A) is preferably 50,000 to 3,000,000, more preferably 80,000 or more, still more preferably 100,000 or more, and particularly preferably 200,000 or more, and it is more preferably 2,400,000 or less, still more preferably 2,200,000 or less, and particularly preferably 2,000,000 or less. The weight average molecular weight can be measured by gel permeation chromatography (GPC) using dimethylformamide as the solvent.

The number average molecular weight (in terms of polystyrene) of the fluorine-containing polymer (A) is preferably 20,000 to 1,500,000, more preferably 40,000 or more, still more preferably 70,000 or more, and particularly preferably 140,000 or more, and it is more preferably 1,400,000 or less, still more preferably 1,200,000 or less, and particularly preferably 1,100,000 or less. The number average molecular weight can be measured by gel permeation chromatography (GPC) using dimethylformamide as the solvent.

The fluorine-containing polymer (A) preferably has a melting point of 100 to 240°C. The melting point described above can be determined as the temperature corresponding to the local maximum value in the heat-of-fusion curve when the temperature is increased at a rate of 10°C/min using a differential scanning calorimetry (DSC) apparatus.

The storage elastic modulus of the fluorine-containing polymer (A) at 30°C is preferably 2,000 MPa or less, and more preferably 1,800 MPa or less.

The storage elastic modulus of the fluorine-containing polymer (A) at 60°C is preferably 1,500 MPa or less, and more preferably 1,300 MPa or less.

The storage elastic modulus of the fluorine-containing polymer (A) at 30°C is preferably 1,000 MPa or more, and more preferably 1,100 MPa or more.

The storage elastic modulus of the fluorine-containing polymer (A) at 60°C is preferably 600 MPa or more, and more preferably 700 MPa or more.

When the storage elastic modulus of the fluorine-containing polymer (A) at 30°C or 60°C is within the above range, the flexibility of the fluorine-containing polymer (A) is improved, and an electrode that is unlikely to crack can be easily formed in the case where it is used as a binder.

<Fluorine-containing copolymer (B)>

The positive electrode mixture of the present disclosure comprises a fluorine-containing copolymer (B) containing vinylidene fluoride unit and a perfluoromonomer unit. By comprising the fluorine-containing copolymer (B), the positive electrode mixture can form a positive electrode with excellent flexibility.

As the perfluoromonomer, at least one selected from the group consisting of tetrafluoroethylene (TFE), perfluoro(methyl vinyl ether), perfluoro(ethyl vinyl ether), perfluoro(propyl vinyl ether), and hexafluoropropylene (HFP) is preferred, and at least one selected from the group consisting of TFE and HFP is more preferred. As the perfluoromonomer, TFE is particularly preferred since a positive electrode mixture whose viscosity is less likely to be increased can be obtained.

The fluorine-containing copolymer (B) may contain other monomer units in addition to vinylidene fluoride and the perfluoromonomer. Examples of the other monomers include vinyl fluoride, trifluoroethylene, chlorotrifluoroethylene (CTFE), a (perfluoroalkyl)ethylene, hexafluoroisobutene, 2,3,3,3-tetrafluoropropene, trans-1,3,3,3-tetrafluoropropene, ethylene, propylene, and a monomer having a polar group.

Examples of the monomer having a polar group include the monomer (1) represented by the general formula (1) mentioned above. When the fluorine-containing copolymer (B) contains a monomer unit having a polar group, the adhesiveness between the positive electrode mixture layer and the current collector is improved. The fluorine-containing copolymer (B) may contain or may not contain a monomer unit derived from the monomer (1).

Examples of the fluorine-containing copolymer (B) include a VdF/TFE copolymer, a VdF/HFP copolymer, a VdF/TFE/HFP copolymer, a VdF/TFE/(meth)acrylic acid copolymer, a VdF/HFP/(meth)acrylic acid copolymer, a VdF/CTFE copolymer, a VdF/TFE/4-pentenoic acid copolymer, a VdF/TFE/3-butenoic acid copolymer, a VdF/TFE/HFP/(meth)acrylic acid copolymer, a VdF/TFE/HFP/4-pentenoic acid copolymer, a VdF/TFE/HFP/3-butenoic acid copolymer, a VdF/TFE/2-carboxyethyl acrylate copolymer, a VdF/TFE/HFP/2-carboxyethyl acrylate copolymer, a VdF/TFE/acryloyloxyethyl succinate copolymer, and a VdF/TFE/HFP/acryloyloxyethyl succinate copolymer.

The content of VdF unit in the fluorine-containing copolymer (B) is, since a positive electrode with excellent flexibility can be formed, preferably 57.0 mol% or more, more preferably 60.0 mol% or more, still more preferably 63.0 mol% or more, and further still more preferably 64.0 mol% or more, and it is preferably 99.0 mol% or less, more preferably 95.0 mol% or less, still more preferably 90.0 mol% or less, and further still more preferably 85.0 mol% or less, based on all

monomer units.

The content of the perfluoromonomer unit in the fluorine-containing copolymer (B) is, since a positive electrode with excellent flexibility can be formed, preferably 1.0 mol% or more, more preferably 5.0 mol% or more, still more preferably 8.0 mol% or more, further still more preferably 10.0 mol% or more, and particularly preferably 15.0 mol% or more, and it is preferably 43.0 mol% or less, more preferably 40.0 mol% or less, still more preferably 38.0 mol% or less, and particularly preferably 37.0 mol% or less, based on all monomer units.

The content of the other monomer units in addition to vinylidene fluoride and the perfluoromonomer in the fluorine-containing copolymer (B) is preferably 0 to 2.0 mol%, and more preferably 1.5 mol% or less, based on all monomer units. The content of the other monomer units in the fluorine-containing copolymer (B) may be 0 mol%. That is, in one embodiment, the fluorine-containing copolymer (B) does not contain the other monomer units in addition to vinylidene fluoride and the perfluoromonomer.

The weight average molecular weight (in terms of polystyrene) of the fluorine-containing copolymer (B) is preferably 50,000 to 3,000,000, more preferably 80,000 or more, still more preferably 100,000 or more, and particularly preferably 200,000 or more, and it is more preferably 2,400,000 or less, still more preferably 2,200,000 or less, and particularly preferably 2,000,000 or less. The weight average molecular weight can be measured by gel permeation chromatography (GPC) using dimethylformamide as the solvent.

The number average molecular weight (in terms of polystyrene) of the fluorine-containing copolymer (B) is preferably 20,000 to 1,500,000, more preferably 40,000 or more, still more preferably 70,000 or more, and particularly preferably 140,000 or more, and it is more preferably 1,400,000 or less, still more preferably 1,200,000 or less, and particularly preferably 1,100,000 or less. The number average molecular weight can be measured by gel permeation chromatography (GPC) using dimethylformamide as the solvent.

The fluorine-containing copolymer (B) preferably has a melting point of 100 to 240°C. The melting point described above can be determined as the temperature corresponding to the local maximum value in the heat-of-fusion curve when the temperature is increased at a rate of 10°C/min using a differential scanning calorimetry (DSC) apparatus.

The storage elastic modulus of the fluorine-containing copolymer (B) at 30°C is preferably 1,100 MPa or less, more preferably 800 MPa or less, and still more preferably 600 MPa or less.

The storage elastic modulus of the fluorine-containing copolymer (B) at 60°C is preferably 500 MPa or less, and more preferably 350 MPa or less.

The storage elastic modulus of the fluorine-containing copolymer (B) at 30°C is preferably 100 MPa or more, more preferably 150 MPa or more, and still more preferably 200 MPa or more.

The storage elastic modulus of the fluorine-containing copolymer (B) at 60°C is preferably 50 MPa or more, more preferably 80 MPa or more, and still more preferably 130 MPa or more.

When the storage elastic modulus of the fluorine-containing copolymer (B) at 30°C or 60°C is within the above range, the flexibility of the fluorine-containing copolymer (B) is even further improved.

In the positive electrode mixture of the present disclosure, the mass ratio (A)/(B) of the fluorine-containing polymer (A) to the fluorine-containing copolymer (B) is, since a positive electrode mixture whose viscosity is less likely to be increased can be obtained and further excellent adhesiveness between the positive electrode mixture layer and the current collector can be obtained, preferably 99/1 to 1/99, more preferably 97/3 to 3/97, still more preferably 95/5 to 5/95, particularly preferably 90/10 to 10/90, and most preferably 85/15 to 15/85. The mass ratio (A)/(B) may be 95/5 to 40/60, or may be 90/10 to 50/50.

In the positive electrode mixture of the present disclosure, the content of the fluorine-containing polymer (A) is preferably 10% by mass or less, more preferably 5% by mass or less, still more preferably 2.0% by mass or less, and particularly preferably 1.6% by mass or less, and it is preferably 0.1% by mass or more, and more preferably 0.5% by mass or more, based on the positive electrode mixture. By setting the content of the fluorine-containing polymer (A) to the above range, a positive electrode mixture whose viscosity is less likely to be increased can be obtained and further excellent adhesiveness between the positive electrode mixture layer and the current collector can be obtained.

In the positive electrode mixture of the present disclosure, the content of the fluorine-containing copolymer (B) is preferably 5% by mass or less, more preferably 2% by mass or less, still more preferably 1% by mass or less, and particularly preferably 0.5% by mass or less, and it is preferably 0.1% by mass or more, more preferably 0.2% by mass or more, and still more preferably 0.3% by mass or more, based on the positive electrode mixture. By setting the content of the fluorine-containing copolymer (B) to the above range, a positive electrode mixture whose viscosity is less likely to be increased can be obtained and further excellent adhesiveness between the positive electrode mixture layer and the current collector can be obtained.

In the positive electrode mixture of the present disclosure, the total content of the fluorine-containing polymer (A) and the fluorine-containing copolymer (B) is preferably 20% by mass or less, more preferably 10% by mass or less, and still more preferably 5% by mass or less, and it is preferably 0.1% by mass or more, and more preferably 0.5% by mass or more, based on the positive electrode mixture. By setting the total content of the fluorine-containing polymer (A) and the fluorine-containing copolymer (B) to the above range, a positive electrode mixture whose viscosity is less likely to be increased can

be obtained and further excellent adhesiveness between the positive electrode mixture layer and the current collector can be obtained.

The positive electrode mixture of the present disclosure may comprise other polymers in addition to the fluorine-containing polymer (A) and the fluorine-containing copolymer (B). Examples of the other polymers include polyacrylic acid, polymethacrylate, polymethyl methacrylate, polyacrylonitrile, polyimide, polyamide, polyamide-imide, polycarbonate, styrene rubber, butadiene rubber, and styrene-butadiene rubber.

<Positive electrode active material (C)>

The positive electrode mixture of the present disclosure comprises a positive electrode active material (C). The positive electrode active material (C) is a positive electrode active material represented by the general formula (C): $Li_yNi_{1-x}M_xO_2$,

wherein x is $0.01 \leq x \leq 0.7$; y is $0.9 \leq y \leq 2.0$; and M represents a metal atom (excluding Li and Ni). By comprising a positive electrode active material that contains Ni in a large amount, the positive electrode mixture can provide a high capacity secondary battery. It has now been found that when a positive electrode active material that contains Ni in a large amount is used and the fluorine-containing polymer (A) and the fluorine-containing copolymer (B) are also used as binders, the viscosity of the positive electrode mixture tends to be increased, but since the positive electrode mixture of the present disclosure contains water in a content in an extremely limited range, the viscosity is unlikely to be increased.

In the general formula (C), examples of the metal atom of M include V, Ti, Cr, Mn, Fe, Co, Cu, Al, Zn, Mg, Ga, Zr, and Si. As the metal atom of M, a transition metal such as V, Ti, Cr, Mn, Fe, Co, and Cu, or a combination of the transition metal described above and another metal such as Al, Ti, V, Cr, Mn, Fe, Co, Cu, Zn, Mg, Ga, Zr, and Si is preferred.

Examples of the positive electrode active material (C) include a lithium transition metal composite oxide. At least one selected from the group consisting of $LiNi_{0.80}Co_{0.15}Al_{0.05}O_2$, $LiNi_{0.82}Co_{0.13}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$ is preferred, and at least one selected from the group consisting of $LiNi_{0.82}Co_{0.15}Al_{0.03}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$ is more preferred.

In the positive electrode mixture of the present disclosure, the ratio of the total mass of the fluorine-containing polymer (A) and the fluorine-containing copolymer (B) to the mass of the positive electrode active material (C) is, since a higher capacity battery can be obtained, preferably 0.01/99.99 to 10/90, more preferably 0.5/99.5 to 4/96, and still more preferably 1/99 to 3/97. In one embodiment, the content of the positive electrode active material (C) in the positive electrode mixture is selected so that, in the case where it is added to the contents of the fluorine-containing polymer (A), the fluorine-containing copolymer (B), the non-aqueous solvent (D), the water (E), and other components such as a conductive agent, the total thereof reaches 100% by mass.

<Non-aqueous solvent (D)>

The positive electrode mixture of the present disclosure comprises a non-aqueous solvent (D). Examples of the non-aqueous solvent (D) may include a low-boiling point general-purpose organic solvent, such as: a nitrogen-containing organic solvent such as N-methyl-2-pyrrolidone, N,N-dimethylacetamide, and dimethylformamide; a ketone solvent such as acetone, methyl ethyl ketone, cyclohexanone, and methyl isobutyl ketone; an ester solvent such as ethyl acetate and butyl acetate; an ether solvent such as tetrahydrofuran and dioxane; as well as a mixed solvent thereof.

As the non-aqueous solvent (D), since a positive electrode mixture with excellent dispersion stability and coatability can be obtained, in particular, at least one selected from the group consisting of N-methyl-2-pyrrolidone and N,N-dimethylacetamide is preferred, and N-methyl-2-pyrrolidone is more preferred.

In the positive electrode mixture of the present disclosure, the content of the non-aqueous solvent (D) is determined in consideration of the applicability to the current collector, thin film formability after drying, and other factors. In the positive electrode mixture of the present disclosure, the total content of the fluorine-containing polymer (A), the fluorine-containing copolymer (B), and the positive electrode active material (C) is preferably 50 to 90% by mass, more preferably 60 to 85% by mass, still more preferably 65 to 80% by mass, and further still more preferably 65 to 75% by mass.

<Water (E)>

The positive electrode mixture of the present disclosure comprises water (E). The content of the water (E) in the positive electrode mixture is 200 to 10,000 ppm by mass based on the mass of the non-aqueous solvent (D). When the positive electrode mixture contains a very small amount of water as described above, a positive electrode mixture whose viscosity is unlikely to be increased can be obtained. Moreover, by using a positive electrode mixture that contains a very small amount of water, the adhesiveness between the positive electrode mixture layer and the current collector, as well as the flexibility of the positive electrode mixture layer, can be improved, and the resistance of the positive electrode mixture

layer (coating film resistance) can be decreased.

The content of the water (E) in the positive electrode mixture is 200 to 10,000 ppm by mass, preferably 1,000 ppm by mass or more, more preferably 2,000 ppm by mass or more, still more preferably 4,000 ppm by mass or more, and further still more preferably 6,000 ppm by mass or more, based on the mass of the non-aqueous solvent (D). When the content of the water (E) is at or above the lower limit described above, the increase in viscosity of the positive electrode mixture can be sufficiently suppressed. When the content of the water (E) is at or below the upper limit described above, the drying time after application of the positive electrode mixture can be shortened and the productivity of the positive electrode can be improved.

Although there is no limitation on the method for adjusting the content of the water (E) in the positive electrode mixture, it can be adjusted by, for example, adding water so that the above content is achieved when preparing the positive electrode mixture.

In the case where water is added when preparing the positive electrode mixture, the amount of the water to be added may be 1 mg or more and 5,000 mg or less, preferably 10 mg or more, and more preferably 50 mg or more, and it is preferably 1,000 mg or less, and more preferably 500 mg or less, based on 100 g of the positive electrode active material.

<Other components>

The positive electrode mixture may further comprise a conductive agent. Examples of the conductive agent include carbon blacks such as acetylene black and Ketjen black, carbon materials such as graphite, carbon fibers, multi-walled carbon nanotubes, single-walled carbon nanotubes, carbon nanohorns, and graphene.

In the positive electrode mixture of the present disclosure, the content ratio of the fluorine-containing polymer (A) to the fluorine-containing copolymer (B), and the conductive agent is 5/95 to 90/10 in mass ratio.

Examples of the method for preparing the positive electrode mixture of the present disclosure include a method in which, in a solution of the fluorine-containing polymer (A) and the fluorine-containing copolymer (B) dissolved in the non-aqueous solvent (D), the positive electrode active material (C), and if desired, the conductive agent are dispersed and mixed. Alternatively, the positive electrode mixture may be prepared by a method in which the fluorine-containing polymer (A) and the fluorine-containing copolymer (B) are first mixed with the positive electrode active material (C), and then the non-aqueous solvent (D), and if desired, the conductive agent are added, or the positive electrode mixture may be prepared by a method in which, to a solution of the fluorine-containing polymer (A) and the fluorine-containing copolymer (B) dissolved in the non-aqueous solvent (D), the conductive agent are added, and after mixing, the positive electrode active material (C) is further added and mixed.

The water (E) may be added when preparing the positive electrode mixture. There is no limitation on the timing of the water addition. For example, the water (E) may be added to a solution in which the fluorine-containing polymer (A) and the fluorine-containing copolymer (B) are dissolved in the non-aqueous solvent (D), or the water (E) may be added to a mixture containing the fluorine-containing polymer (A), the fluorine-containing copolymer (B), the positive electrode active material (C), and the non-aqueous solvent (D).

The viscosity of the positive electrode mixture of the present disclosure is, since application is easy and it is also easy to obtain a positive electrode mixture layer having the desired thickness, preferably 1,000 mPa·s or more, more preferably 3,000 mPa·s or more, still more preferably 5,000 mPa·s or more, and further still more preferably 7,000 mPa·s or more, and it is preferably 80,000 mPa·s or less, more preferably 70,000 mPa·s or less, and still more preferably 60,000 mPa·s or less. The viscosity described above can be measured at 25°C with a B-type viscometer. Since the positive electrode mixture of the present disclosure has a viscosity that is unlikely to be increased, it is possible to maintain a viscosity that allows easy application and easy adjustment of the thickness of the positive electrode mixture layer over a long period of time.

<Positive electrode>

A positive electrode of the present disclosure is formed from the positive electrode mixture mentioned above. Examples of the method for forming a positive electrode using the positive electrode mixture mentioned above include a method in which the positive electrode mixture mentioned above is applied to a current collector, dried, and pressed to form a thin positive electrode mixture layer on the current collector to provide a thin-film electrode. That is, in one preferred embodiment, the positive electrode of the present disclosure comprises a current collector and a positive electrode mixture layer formed from the positive electrode mixture mentioned above on the current collector described above.

Examples of the current collector described above include a metal foil or a metal mesh, such as iron, stainless steel, copper, aluminum, nickel, and titanium, and among these, an aluminum foil is preferred.

<Secondary battery>

A secondary battery of the present disclosure comprises the positive electrode mentioned above. It is preferable that the secondary battery of the present disclosure further comprises, in addition to the positive electrode mentioned above, a negative electrode and a non-aqueous electrolyte.

Although the non-aqueous electrolyte described above is not limited, one or two or more of the following known solvents can be used: propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate. For the electrolyte, any of those conventionally known can be used, and $LiClO_4$, $LiAsF_6$, $LiPF_6$, $LiBF_4$, LiCl, LiBr, $CH_3SO_3Li$, $CF_3SO_3Li$, cesium carbonate, and others can be used.

The positive electrode mixture of the present disclosure is useful for non-aqueous electrolyte secondary batteries, not only for lithium-ion secondary batteries using the liquid electrolyte described above, but also for polymer electrolyte lithium secondary batteries. It is also useful for electric double layer capacitors.

Although the embodiments have been described above, it will be understood that a wide variety of modifications can be made in the form and details without departing from the spirit and scope of the claims.

<1> According to the first viewpoint of the present disclosure,

provided is a positive electrode mixture comprising a fluorine-containing polymer (A), a fluorine-containing copolymer (B), a positive electrode active material (C), a non-aqueous solvent (D), and water (E),
wherein the fluorine-containing polymer (A) contains vinylidene fluoride unit and a monomer unit derived from a monomer (1) represented by the general formula (1):

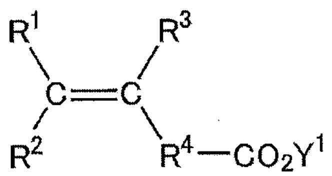

wherein $R^1$ to $R^3$ independently represent hydrogen atom or a hydrocarbon group having 1 to 8 carbon atoms; $R^4$ represents single bond or a hydrocarbon group having 1 to 8 carbon atoms;
and $Y^1$ represents an inorganic cation and/or an organic cation,

wherein the fluorine-containing copolymer (B) contains vinylidene fluoride unit and a perfluoromonomer unit,
wherein the positive electrode active material (C) is a positive electrode active material represented by the general formula (C): $Li_yNi_{1-x}M_xO_2$
wherein x is $0.01 \leq x \leq 0.7$; y is $0.9 \leq y \leq 2.0$; and M represents a metal atom excluding Li and Ni, and
wherein a content of water (E) is 200 to 10,000 ppm by mass based on a mass of the non-aqueous solvent (D).

<2> According to the second viewpoint of the present disclosure,
provided is the positive electrode mixture according to the first viewpoint, wherein the fluorine-containing polymer (A) has a content of vinylidene fluoride unit of 92.0 to 99.999 mol% based on all monomer units.
<3> According to the third viewpoint of the present disclosure,
provided is the positive electrode mixture according to the first or the second viewpoint, wherein the fluorine-containing polymer (A) has a content of the monomer unit derived from a monomer (1) of 0.001 to 8.0 mol% based on all monomer units.
<4> According to the fourth viewpoint of the present disclosure,
provided is the positive electrode mixture according to any of the first to the third viewpoints, wherein the fluorine-containing copolymer (B) has a content of vinylidene fluoride unit of 60.0 to 99.0 mol% based on all monomer units.
<5> According to the fifth viewpoint of the present disclosure,
provided is the positive electrode mixture according to any of the first to the fourth viewpoints, wherein the fluorine-containing copolymer (B) has a content of the perfluoromonomer unit of 1.0 to 40.0 mol% based on all monomer units.
<6> According to the sixth viewpoint of the present disclosure,
provided is the positive electrode mixture according to any of the first to the fifth viewpoints, wherein the non-aqueous solvent (D) contains N-methyl-2-pyrrolidone.
<7> According to the seventh viewpoint of the present disclosure,
provided is the positive electrode mixture according to any of the first to the sixth viewpoints, wherein a content of water

(E) is 1,000 to 10,000 ppm by mass based on a mass of the non-aqueous solvent (D).
<8> According to the eighth viewpoint of the present disclosure,

provided is the positive electrode mixture according to any of the first to the seventh viewpoints,
wherein the fluorine-containing polymer (A) contains vinylidene fluoride unit and a monomer unit derived from at least one monomer (1) selected from the group consisting of (meth)acrylic acid and a salt thereof, vinyl acetic acid (3-butenoic acid) and a salt thereof, 3-pentenoic acid and a salt thereof, 4-pentenoic acid and a salt thereof, 3-hexenoic acid and a salt thereof, 4-heptenoic acid and a salt thereof, and 5-hexenoic acid and a salt thereof, and
wherein the fluorine-containing copolymer (B) contains vinylidene fluoride unit and a perfluoromonomer unit derived from at least one perfluoromonomer selected from the group consisting of tetrafluoroethylene and hexafluoropropylene.

<9> According to the ninth viewpoint of the present disclosure,

provided is the positive electrode mixture according to any of the first to the eighth viewpoints,
wherein a mass ratio of the fluorine-containing polymer (A) to the fluorine-containing copolymer (B), (A)/(B), is 95/5 to 15/85,
wherein a ratio of a total mass of the fluorine-containing polymer (A) and the fluorine-containing copolymer (B) to a mass of the positive electrode active material (C) is 1/99 to 3/97, and
wherein a total content of the fluorine-containing polymer (A), the fluorine-containing copolymer (B), and the positive electrode active material (C) is 50 to 90% by mass.

<10> According to the tenth viewpoint of the present disclosure,
provided is a positive electrode comprising a positive electrode mixture layer formed from the positive electrode mixture according to any of the first to the ninth viewpoints.
<11> According to the eleventh viewpoint of the present disclosure,
provided is a secondary battery comprising the positive electrode according to the tenth viewpoint.

## EXAMPLES

Hereinafter, embodiments of the present disclosure will be described with reference to Examples, but the present disclosure is not limited solely to such Examples.
Each numerical value in Examples was measured according to the following method.

<Compositional features of fluorine-containing polymer (A) >

Content of polar group-containing monomer unit

The content of a polar group-containing monomer unit (acrylic acid unit) in the fluorine-containing polymer (A) was measured by acid-base titration of the carboxylic acid group. Specifically, about 0.5 g of the fluorine-containing polymer (A) was dissolved in acetone at a temperature of 70 to 80°C. 5 ml of water was added dropwise with vigorous stirring to avoid coagulation of the fluorine-containing polymer (A). Titration with an aqueous NaOH solution with a concentration of 0.1N was performed until complete neutralization of acidity at a neutral transition at about -270 mV. The amount of substance of the polar group-containing monomer unit contained in 1 g of the fluorine-containing polymer (A) was determined from the measurement results, and the content of the polar group-containing monomer unit was calculated.

<Compositional features of fluorine-containing copolymer (B) >

Ratio of VdF unit to TFE unit

The ratio of VdF unit to TFE unit in the fluorine-containing copolymer (B) was measured in the state of polymer solution in DMF-$d_7$ by $^{19}$F-NMR measurement using an NMR analyzer (manufactured by Agilent Technologies, Inc., VNS400MHz).
The areas of the following peaks (A, B, C, and D) were determined by $^{19}$F-NMR measurement, and the ratio of VdF unit to TFE unit was calculated.

A: Area of the peak of -86 ppm to -98 ppm

B: Area of the peak of -105 ppm to -118 ppm
C: Area of the peak of -119 ppm to -122 ppm
D: Area of the peak of -122 ppm to -126 ppm

Proportion of VdF unit: $(4A + 2B)/(4A + 3B + 2C + 2D) \times 100$ [mol%]

Proportion of TFE unit: $(B + 2C + 2D)/(4A + 3B + 2C + 2D) \times 100$ [mol%]

Ratio of VdF unit to HFP unit

The ratio of VdF unit to HFP unit in the fluorine-containing copolymer (B) was measured in the state of polymer solution in DMF-$d_7$ by $^{19}$F-NMR measurement using an NMR analyzer (manufactured by Agilent Technologies, Inc., VNS400MHz).

Content of polar group-containing monomer unit

The content of a polar group-containing monomer unit (4-pentenoic acid unit) in the fluorine-containing copolymer (B) was measured by acid-base titration of the carboxylic acid group. Specifically, about 0.5 g of the fluorine-containing copolymer (B) was dissolved in acetone at a temperature of 70 to 80°C. 5 ml of water was added dropwise with vigorous stirring to avoid coagulation of the fluorine-containing copolymer (B). Titration with an aqueous NaOH solution with a concentration of 0.1N was performed until complete neutralization of acidity at a neutral transition at about - 270 mV. The amount of substance of the polar group-containing monomer unit contained in 1 g of the fluorine-containing copolymer (B) was determined from the measurement results, and the content of the polar group-containing monomer unit was calculated.

<Weight average molecular weight>

The weight average molecular weight was measured by gel permeation chromatography (GPC). The weight average molecular weight was calculated from data measured with dimethylformamide (DMF) as the solvent at a flow rate of 1.0 ml/min using AS-8010, CO-8020, and columns (three GMHHR-H connected in series) manufactured by Tosoh Corporation, and RID-10A manufactured by SHIMADZU CORPORATION (reference: polystyrene).

<Storage elastic modulus (E')>

The storage elastic modulus is a value measured at 30°C or 60°C by dynamic viscoelasticity measurement. Measurement was performed using a dynamic viscoelasticity apparatus DVA220 manufactured by IT Keisoku Seigyo Co., Ltd. under the following conditions: a test piece with a length of 30 mm, width of 5 mm, and thickness of 50 to 100 μm; tensile mode; a grip width of 20 mm; a measurement temperature of -30°C to 160°C; a temperature-increasing rate of 2°C/min; and a frequency of 1 Hz.

The test piece used for the measurement was fabricated as follows. PVdF and the fluorine-containing copolymer were dissolved in N-methyl-2-pyrrolidone (NMP) to reach a concentration of 10 to 20% by mass. The resulting polymer solution was cast onto a glass plate and dried at 100°C for 12 hours, followed by further drying under vacuum at 100°C for 12 hours. The resulting film, having a thickness of 50 to 100 μm, was cut to a length of 30 mm and a width of 5 mm.

<Melting point>

The melting point was determined as the temperature corresponding to the local maximum value in the heat-of-fusion curve when the temperature was increased from 30°C to 220°C at a rate of 10°C/min, then decreased to 30°C at 10°C/min, and increased again to 220°C at 10°C/min, using a differential scanning calorimetry (DSC) apparatus.

<Measurement of water content>

The water content was measured using a Karl Fischer moisture meter (manufactured by Kyoto Electronics Manufacturing Co., Ltd.) under an environment with a dew point of -50°C.

<Viscosity of positive electrode mixture>

As for the viscosity of the positive electrode mixture, measurement was performed using a B-type viscometer (manufactured by Toki Sangyo Co., Ltd., TV-10M) under the conditions of 25°C, rotor No. M4, and a rotation speed of 6 rpm, and the measured value after 10 minutes had passed from the start of measurement was defined as the viscosity.

<Rate of change in viscosity>

The viscosity at the time of mixture preparation (η0) and the viscosity after n hours from the mixture preparation (ηn) were each measured, and the rate of change in viscosity (Xn) was determined by the following expression.

$$Xn = \eta n/\eta 0 \times 100\ [\%]$$

In Table 1, "Poor" indicates that the viscosity of the positive electrode mixture was too high and the viscosity could not be measured.

<Adhesiveness between positive electrode mixture layer and current collector (peel strength)>

A 1.2 cm × 7.0 cm test piece was fabricated by cutting a one-sided coated positive electrode structure obtained by pressing with a roll press machine. After fixing the positive electrode mixture layer side of the test piece to a movable jig with double-sided tape, tape was applied to the surface of the positive electrode current collector, and the stress (N/cm) when pulling the tape at 90 degrees at a speed of 100 mm/min was measured using an autograph. A 1 N load cell was used for the autograph.

<Coating film resistance>

A 5 cm × 5 cm test piece was fabricated by cutting out a film for coating film resistance measurement, and the coating film resistance was evaluated by the four-terminal method.

<Positive electrode flexibility>

A 2 cm × 10 cm test piece was fabricated by cutting out a double-sided coated positive electrode structure obtained by pressing with a roll press machine. The test piece was wrapped around a cylindrical rod with a size of 3 mm, 2 mm, 1.5 mm, or 1.0 mm in diameter, and the positive electrode flexibility was visually checked and evaluated according to the following criteria.
Good: No cracks were observed.
Fair: Cracks were observed, but no breakage of the positive electrode mixture layer and the current collector was observed.
Poor: Breakage of the positive electrode mixture layer and the current collector occurred.
In Examples and Comparative Examples, polymers having the following physical properties were used.

<Fluorine-containing polymer (A))>

A-I: PVdF containing acrylic acid unit

content of acrylic acid unit 1.0 mol%
weight average molecular weight 1,100,000
storage elastic modulus at 30°C: 1,280 MPa
storage elastic modulus at 60°C: 720 MPa
melting point 161°C

<Fluorine-containing copolymer (B)>

B-I: Fluorine-containing copolymer containing VdF unit and TFE unit

$$VdF/TFE = 83/17\ (mol\%)$$

weight average molecular weight 1,230,000
storage elastic modulus at 30°C: 490 MPa
storage elastic modulus at 60°C: 260 MPa
melting point 131°C

B-II: Fluorine-containing copolymer containing VdF unit and TFE unit

$$VdF/TFE = 63/37\ (mol\%)$$

weight average molecular weight 1,130,000
storage elastic modulus at 30°C: 440 MPa
storage elastic modulus at 60°C: 180 MPa
melting point 160°C

B-III: Fluorine-containing copolymer containing VdF unit, TFE unit, and 4-pentenoic acid unit

$$VdF/TFE = 82/18\ (mol\%)$$

content of 4-pentenoic acid 0.5 mol%
weight average molecular weight 820,000
storage elastic modulus at 30°C: 363 MPa
storage elastic modulus at 60°C: 165 MPa
melting point 123°C

B-IV: Fluorine-containing copolymer containing VdF unit and HFP unit

$$VdF/HFP = 95/5\ (mol\%)$$

weight average molecular weight: 700,000
storage elastic modulus at 30°C: 310 MPa
storage elastic modulus at 60°C: 145 MPa
melting point: 135°C

In addition, the following positive electrode active material and conductive agent were used in Examples and Comparative Examples.

Ni90: $LiNi_{0.9}Mn_{0.05}Co_{0.05}O_2$
AB: acetylene black

Example 1

(Preparation of positive electrode mixture)

The fluorine-containing polymer (A-I) as a binder was dissolved in N-methyl-2-pyrrolidone (NMP) to prepare a

fluorine-containing polymer (A-I) solution with a concentration of 8% by mass. In the same manner, the fluorine-containing copolymer (B-I) as a binder was dissolved in N-methyl-2-pyrrolidone (NMP) to prepare a fluorine-containing copolymer (B-I) solution with a concentration of 8% by mass. 20 g of the fluorine-containing polymer (A-I) solution, 5 g of the fluorine-containing copolymer (B-I) solution, and 2 g of acetylene black as a conductive agent were kneaded using a stirrer to obtain a conductive agent paste. 4 mg of water was added to the conductive agent paste, and kneading was further carried out. 96 g of Ni90 as a positive electrode active material was added to the obtained paste, which was mixed using a stirrer to obtain a mixed solution. NMP was further added to the obtained mixed solution, which was mixed to prepare a positive electrode mixture with a solid concentration of 67% by mass.

(Fabrication of positive electrode structure)

The obtained positive electrode mixture was immediately applied uniformly to one side of a positive electrode current collector (aluminum foil with a thickness of 20 μm) after preparation, and after completely volatilizing NMP, a positive electrode structure was fabricated by pressing under a pressure of 10 tons using a roll press machine.

In addition, the obtained positive electrode mixture was immediately applied uniformly to both sides of a positive electrode current collector (aluminum foil with a thickness of 20 μm) after preparation, and after completely volatilizing NMP, a positive electrode structure was fabricated by repeatedly pressing under pressure using a roll press machine until the density of the positive electrode mixture layer reached 3.6 g/$cm^3$.

(Fabrication of film for coating film resistance measurement)

The obtained positive electrode mixture was immediately applied uniformly to one side of a polyethylene terephthalate film (with a thickness of 100 μm) after preparation, and a film for coating resistance measurement was fabricated by completely volatilizing NMP.

Examples 2 to 8 and Comparative Examples 1 to 4

Except for changing the type of binder, the amount of water added, and other factors as shown in Table 1, positive electrode mixtures were prepared in the same manner as in Example 1, positive electrode structures and films for coating film resistance measurement were fabricated, and evaluation was conducted in the same manner as in Example 1. The results are shown in Table 1.

[Table 1]

Table 1

| | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|---|
| Fluorine-containing polymer (A) | A-I | g | 1.6 | 1.6 | 1.6 | 1.6 | 1.6 | 1.5 | 1.0 | 1.8 | 1.6 | 1.6 | 1.5 | 1.8 |
| Fluorine-containing copolymer (B) | B-I | g | 0.4 | 0.4 | 0.4 | 0.4 | 0.4 | | | | 0.4 | 0.4 | | |
| | B-II | g | | | | | | 0.5 | | | | | 0.5 | |
| | B-III | g | | | | | | | 1.0 | | | | | |
| | B-IV | g | | | | | | | | 0.2 | | | | 0.2 |
| Positive electrode active material (C) | Ni90 | g | 96 | 96 | 96 | 96 | 96 | 96 | 96 | 96 | 96 | 96 | 96 | 96 |
| Conductive agent | AB | g | 2 | 2 | 2 | 2 | 2 | 2 | 2 | 2 | 2 | 2 | 2 | 2 |
| Positive electrode mixture solid concentration | | % | 67 | 67 | 67 | 67 | 67 | 67 | 67 | 67 | 67 | 67 | 67 | 67 |
| Water content | Binder | mg | 0.2 | 0.2 | 0.2 | 0.2 | 0.2 | 0.2 | 0.2 | 0.2 | 0.2 | 0.2 | 0.2 | 0.2 |
| | Positive electrode active material (C) | mg | 4.8 | 4.8 | 4.8 | 4.8 | 4.8 | 4.8 | 4.8 | 4.8 | 4.8 | 4.8 | 4.8 | 4.8 |
| | Conductive agent | mg | 0.2 | 0.2 | 0.2 | 0.2 | 0.2 | 0.2 | 0.2 | 0.2 | 0.2 | 0.2 | 0.2 | 0.2 |
| | Non-aqueous solvent (D) | mg | 1.7 | 1.7 | 1.7 | 1.7 | 1.7 | 1.7 | 1.7 | 1.7 | 1.7 | 17 | 1.7 | 1.7 |
| Amount of water added | | mg | 4 | 50 | 100 | 200 | 350 | 200 | 350 | 100 | 0 | 600 | 0 | 0 |
| Content of water in positive electrode mixture based on non-aqueous solvent (D) | | ppm | 221 | 1155 | 2170 | 4201 | 7246 | 4201 | 7246 | 2170 | 140 | 12322 | 140 | 140 |

(continued)

| | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|---|
| Viscosity at the time of mixture preparation | η0 | mPa•s | 8600 | 8300 | 8200 | 8000 | 8000 | 7800 | 8400 | 7600 | 9300 | 7800 | 9200 | 9000 |
| Rate of change in viscosity | X24 | % | 221 | 180 | 141 | 119 | 102 | 123 | 121 | 211 | Poor | 340 | Poor | Poor |
| | X96 | % | Poor | 340 | 221 | 132 | 129 | 138 | 141 | 389 | Poor | Poor | Poor | Poor |
| Peel strength | | N/cm | 0.39 | 0.42 | 0.44 | 0.45 | 0.42 | 0.43 | 0.56 | 0.23 | 0.34 | 0.29 | 0.33 | 0.11 |
| Coating film resistance | | Ω·cm | 28 | 29 | 29 | 31 | 32 | 33 | 33 | 40 | 65 | 45 | 67 | 73 |
| Positive electrode flexibility | | 3Φ | Good | Good | Good | Good | Good | Good | Good | Good | Poor | Good | Poor | Poor |
| | | 2Φ | Good | Good | Good | Good | Good | Good | Good | Good | Poor | Good | Poor | Poor |
| | | 1.5Φ | Poor | Fair | Good | Good | Good | Good | Good | Poor | Poor | Poor | Poor | Poor |
| | | 1Φ | Poor | Poor | Poor | Poor | Good | Fair | Poor | Poor | Poor | Poor | Poor | Poor |

## Claims

1. A positive electrode mixture comprising a fluorine-containing polymer (A), a fluorine-containing copolymer (B), a positive electrode active material (C), a non-aqueous solvent (D), and water (E),

   wherein the fluorine-containing polymer (A) contains vinylidene fluoride unit and a monomer unit derived from a monomer (1) represented by the general formula (1):

   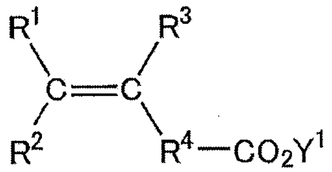

   wherein $R^1$ to $R^3$ independently represent hydrogen atom or a hydrocarbon group having 1 to 8 carbon atoms; $R^4$ represents single bond or a hydrocarbon group having 1 to 8 carbon atoms;
   and $Y^1$ represents an inorganic cation and/or an organic cation,

   wherein the fluorine-containing copolymer (B) contains vinylidene fluoride unit and a perfluoromonomer unit,
   wherein the positive electrode active material (C) is a positive electrode active material represented by the general formula (C): $Li_yNi_{1-x}M_xO_2$
   wherein x is $0.01 \leq x \leq 0.7$; y is $0.9 \leq y \leq 2.0$; and M represents a metal atom excluding Li and Ni, and
   wherein a content of water (E) is 200 to 10,000 ppm by mass based on a mass of the non-aqueous solvent (D).

2. The positive electrode mixture according to claim 1, wherein the fluorine-containing polymer (A) has a content of vinylidene fluoride unit of 92.0 to 99.999 mol% based on all monomer units.

3. The positive electrode mixture according to claim 1 or 2, wherein the fluorine-containing polymer (A) has a content of the monomer unit derived from a monomer (1) of 0.001 to 8.0 mol% based on all monomer units.

4. The positive electrode mixture according to any one of claims 1 to 3, wherein the fluorine-containing copolymer (B) has a content of vinylidene fluoride unit of 60.0 to 99.0 mol% based on all monomer units.

5. The positive electrode mixture according to any one of claims 1 to 4, wherein the fluorine-containing copolymer (B) has a content of the perfluoromonomer unit of 1.0 to 40.0 mol% based on all monomer units.

6. The positive electrode mixture according to any one of claims 1 to 5, wherein the non-aqueous solvent (D) contains N-methyl-2-pyrrolidone.

7. The positive electrode mixture according to any one of claims 1 to 6, wherein a content of water (E) is 1,000 to 10,000 ppm by mass based on a mass of the non-aqueous solvent (D).

8. The positive electrode mixture according to any one of claims 1 to 7,

   wherein the fluorine-containing polymer (A) contains vinylidene fluoride unit and a monomer unit derived from at least one monomer (1) selected from the group consisting of (meth)acrylic acid and a salt thereof, vinyl acetic acid (3-butenoic acid) and a salt thereof, 3-pentenoic acid and a salt thereof, 4-pentenoic acid and a salt thereof, 3-hexenoic acid and a salt thereof, 4-heptenoic acid and a salt thereof, and 5-hexenoic acid and a salt thereof, and
   wherein the fluorine-containing copolymer (B) contains vinylidene fluoride unit and a perfluoromonomer unit derived from at least one perfluoromonomer selected from the group consisting of tetrafluoroethylene and hexafluoropropylene.

9. The positive electrode mixture according to any one of claims 1 to 8,

   wherein a mass ratio of the fluorine-containing polymer (A) to the fluorine-containing copolymer (B), (A)/(B), is 95/5 to 15/85,
   wherein a ratio of a total mass of the fluorine-containing polymer (A) and the fluorine-containing copolymer (B) to a

mass of the positive electrode active material (C) is 1/99 to 3/97, and
wherein a total content of the fluorine-containing polymer (A), the fluorine-containing copolymer (B), and the positive electrode active material (C) is 50 to 90% by mass.

**10.** A positive electrode comprising a positive electrode mixture layer formed from the positive electrode mixture according to any one of claims 1 to 9.

**11.** A secondary battery comprising the positive electrode according to claim 10.

## INTERNATIONAL SEARCH REPORT

International application No.
**PCT/JP2025/006733**

**A. CLASSIFICATION OF SUBJECT MATTER**

***H01M 4/1391***(2010.01)i; ***H01M 4/62***(2006.01)i; ***H01M 4/525***(2010.01)i
FI: H01M4/1391; H01M4/62 Z; H01M4/525

According to International Patent Classification (IPC) or to both national classification and IPC

**B. FIELDS SEARCHED**

Minimum documentation searched (classification system followed by classification symbols)

H01M4/1391; H01M4/62; H01M4/525

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-192136 A (ASAHI KASEI KABUSHIKI KAISHA) 06 October 2014 (2014-10-06) claims, paragraphs [0018]-[0023], [0035]-[0036], examples | 1-11 |
| Y | WO 2010/092976 A1 (DAIKIN INDUSTRIES, LTD.) 19 August 2010 (2010-08-19) claims, paragraphs [0015], [0050], examples | 1-6, 8-11 |
| Y | WO 2022/234810 A1 (DAIKIN INDUSTRIES, LTD.) 10 November 2022 (2022-11-10) claims, paragraphs [0010], [0018], examples | 1-11 |
| Y | WO 2021/172586 A1 (DAIKIN INDUSTRIES, LTD.) 02 September 2021 (2021-09-02) claims, paragraphs [0019]-[0020], examples | 1-11 |
| A | WO 2008/139578 A1 (PANASONIC CORPORATION) 20 November 2008 (2008-11-20) entire text | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2025** | **27 May 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/006733**

| Patent document cited in search report | Publication date (day/month/year) | Patent family member(s) | Publication date (day/month/year) |
|---|---|---|---|
| JP 2014-192136 A | 06 October 2014 | (Family: none) | |
| WO 2010/092976 A1 | 19 August 2010 | US 2011/0318638 A1<br>claims, paragraphs [0018], [0057], examples<br>EP 2398095 A1<br>CN 102308417 A<br>KR 10-2011-0111482 A | |
| WO 2022/234810 A1 | 10 November 2022 | US 2024/0088381 A1<br>claims, paragraphs [0014], [0022], examples<br>EP 4336584 A1<br>CN 117280489 A<br>KR 10-2024-0004867 A | |
| WO 2021/172586 A1 | 02 September 2021 | US 2022/0407075 A1<br>claims, paragraphs [0018]-[0019], examples<br>EP 4112689 A1<br>CN 115087704 A<br>KR 10-2022-0132569 A | |
| WO 2008/139578 A1 | 20 November 2008 | US 2009/0305143 A1<br>entire text<br>CN 101405898 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010092976 A
- WO 2020071336 A